# EUROPEAN PATENT APPLICATION

(11) **EP 4 672 395 A1**
(43) Date of publication of application: **31.12.2025**
(21) Application number: 25161573.8
(22) Date of filing: 04.03.2025
(51) Int. Cl.: H01M 10/04, H01M 10/0525, H01M 10/0587, H01M 50/474, H01M 50/538

(54) **BATTERY AND METHOD OF MANUFACTURING SAME**

(30) Priority: 25.06.2024 KR 20240082721
(71) Applicant: Samsung SDI Co., Ltd., Yongin-si, Gyeonggi-do 17084 (KR)
(72) Inventor: JANG, TAEWOONG, Yongin-si, Gyeonggi-do 17084 (KR)
(74) Representative: Gulde & Partner

(57) **Abstract**

A battery includes: an electrode assembly including a first electrode, a second electrode, and a separator between the first electrode and the second electrode and wound together; a case to accommodate the electrode assembly, and including a bottom portion, a sidewall portion connected to the bottom portion, and an opening at a side opposite to the bottom portion; and a cap assembly to seal the opening by being connected to one end of the sidewall portion of the case. A substrate of the second electrode extends and is wound to surround an outer circumference of the electrode assembly, and at least a portion of the outer circumference of the electrode assembly contacts the sidewall portion of the case.

## Description

### BACKGROUND

### 1. Field

Aspects of embodiments of the present disclosure relate to a battery, and a method of manufacturing the battery.

### 2. Description of the Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

Secondary batteries are manufactured by inserting an electrode assembly into a case, and then sealing the case with a cap assembly. For example, an electrode tab connected to the electrode assembly is connected to an inner surface of the case and/or the cap assembly, and then the case and the cap assembly are welded together along an outer circumferential surface of the cap assembly to seal the case.

The above information disclosed in this Background section is for enhancement of understanding of the background of the present disclosure, and therefore, it may contain information that does not constitute related (or prior) art.

### SUMMARY

Cracks may occur in the electrode tab connected to the inner surface of the case in a case where the battery receives an external impact. In addition, during a process of welding the cap assembly and the case together, the electrode assembly inside the case may interfere with the welding area of the cap assembly and the case.

Aspects of embodiments of the present disclosure may be directed to a battery, and a method of manufacturing the battery.

These and other aspects and features of the present disclosure will be described in or will be apparent from the following description of embodiments of the present disclosure.

According to one or more embodiments of the present disclosure, a battery includes: an electrode assembly including a first electrode, a second electrode, and a separator (arranged) between the first electrode and the second electrode and wound together; a case configured to accommodate the electrode assembly, and including a bottom portion, a sidewall portion connected to the bottom portion, and an opening at a side opposite to the bottom portion; and a cap assembly configured to seal the opening by being coupled to one end of the sidewall portion of the case. A substrate of the second electrode extends (e.g. in a longitudinal direction, when unwound) and is wound to surround an outer circumference of the electrode assembly, and at least a portion of the outer circumference of the electrode assembly contacts (electrically conductive) the sidewall portion of the case. This arrangement allows omission of one of typically two electrode tabs, due to electrical conduction through physical contact or physical pressure of the outer circumference of the electrode assembly with the sidewall portion of the case.

In an embodiment, the substrate of the second electrode may surround the outer circumference of the electrode assembly by at least one turn.

In an embodiment, the substrate of the second electrode may surround the outer circumference of the electrode assembly by three or less turns.

In an embodiment, the substrate of the second electrode may space the separator of the electrode assembly from a region where the cap assembly and the case are coupled to each other.

In an embodiment, the electrode assembly may further include a (electrically) conductive tape surrounding at least a portion of the outer circumference of the electrode assembly, and at least a portion of the conductive tape may (directly) contact the sidewall portion of the case.

In an embodiment, the conductive tape may surround the outer circumference of the electrode assembly by at least a half of a turn to cover a winding end of the electrode assembly.

In an embodiment, the conductive tape may surround the outer circumference of the electrode assembly by two to six turns.

In an embodiment, the conductive tape may surround the outer circumference of the electrode assembly by at least one turn, and a thickness of the outer circumference of the electrode assembly surrounded by the substrate of the second electrode and the conductive tape may be 100 µm or more and 360 µm or less.

In an embodiment, the conductive tape may space the separator of the electrode assembly from a region where the cap assembly and the case are coupled to each other.

In an embodiment, the conductive tape may include adhesives on opposite surfaces thereof, one surface of the conductive tape from among the opposite surfaces may face the outer circumference of the electrode assembly, and another surface of the conductive tape from among the opposite surfaces may face the sidewall portion of the case.

In an embodiment, at least a portion of the conductive tape may include at least one of an isotropic conductive adhesive or an anisotropic conductive adhesive.

In an embodiment, the electrode assembly may further include an electrode tab connected to a substrate of the first electrode, and the electrode tab may be connected to the cap assembly.

In an embodiment, the battery may include a coin cell or a button cell.

According to one or more embodiments of the present disclosure, a method of manufacturing a battery includes: preparing an electrode assembly by winding a first electrode, a second electrode, and a separator disposed between the first electrode and the second electrode together; preparing a case including a bottom portion, a sidewall portion connected to the bottom portion, and an opening at a side opposite to the bottom portion; inserting the electrode assembly into the case; and sealing the opening by coupling the case and a cap assembly to each other. A substrate of the second electrode extends (e.g. in a longitudinal direction, when unwound) and is wound to surround an outer circumference of the electrode assembly, and at least a portion of the outer circumference of the electrode assembly contacts (electrically conductive) the sidewall portion of the case.

In an embodiment, the preparing of the electrode assembly may include winding the substrate of the second electrode to surround the outer circumference of the electrode assembly by one to three turns.

In an embodiment, the preparing of the electrode assembly may include attaching a (electrically) conductive tape to surround at least a portion of the outer circumference of the electrode assembly, and the inserting of the electrode assembly may include arranging at least a portion of the conductive tape to (directly) contact with the sidewall portion of the case.

In an embodiment, the attaching of the conductive tape may include attaching the conductive tape to surround the outer circumference of the electrode assembly by at least a half of a turn to cover a winding end of the electrode assembly.

In an embodiment, the attaching of the conductive tape may include attaching the conductive tape to surround the outer circumference of the electrode assembly by at least one turn, and a thickness of the outer circumference of the electrode assembly surrounded by the substrate of the second electrode and the conductive tape may be 100 µm or more and 360 µm or less.

In an embodiment, the conductive tape may include adhesives on opposite surfaces thereof. The attaching may include attaching one surface of the conductive tape from among the opposite surfaces to face the outer circumference of the electrode assembly, and attaching another surface of the conductive tape from among the opposite surfaces to face the sidewall portion of the case.

In an embodiment, an electrode tab may be connected to a substrate of the first electrode, and the inserting of the electrode assembly may include connecting the electrode tab to the cap assembly.

According to some embodiments of the present disclosure, because one surface of the conductive tape may be attached to face the outer circumference of the electrode assembly, and another surface (e.g., an opposite surface) of the conductive tape may be attached to face the sidewall portion of the case, the movement of the electrode assembly within the case may be suppressed, and a stable current conduction between the electrode assembly and the case may be achieved.

According to some embodiments of the present disclosure, because the uncoated portion or the conductive tape of the second electrode may be in direct contact with the sidewall portion of the case, a configuration of the electrode tab for conducting between the second electrode and the case may be omitted. Accordingly, it may be possible to prevent or substantially prevent cracks from occurring in the electrode tab of the second electrode, and prevent the electrode tab of the second electrode from being separated from the case due to a vibration and/or a dropping of the battery.

According to some embodiments of the present disclosure, the separator and the electrode tab of the first electrode may be prevented from being caught in an area where the cap assembly and the case are joined to each other, and the separator and the electrode tab of the first electrode may be prevented or substantially prevented from being damaged by a welding heat.

However, aspects and features of the present disclosure are not limited to those described above, and other aspects and features not mentioned will be clearly understood by a person skilled in the art from the detailed description, described below.

### BRIEF DESCRIPTION OF DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings.
FIG. 1 illustrates a longitudinal cross-sectional view showing an example of a battery according to an embodiment of the present disclosure.
FIG. 2 illustrates a cross-sectional view showing an example of an electrode assembly according to an embodiment of the present disclosure.
FIG. 3 illustrates a longitudinal cross-sectional view showing an example of a battery according to an embodiment of the present disclosure.
FIG. 4 illustrates a cross-sectional view showing an example of an electrode assembly according to an embodiment of the present disclosure.
FIG. 5 illustrates a longitudinal cross-sectional view showing an example of a battery according to an embodiment of the present disclosure.
FIG. 6 illustrates a cross-sectional view showing an example of an electrode assembly according to an embodiment of the present disclosure.
FIG. 7 illustrates a longitudinal cross-sectional view showing an example of a battery according to an embodiment of the present disclosure.
FIG. 8 illustrates a partially enlarged view of a battery according to an embodiment of the present disclosure.
FIG. 9 illustrates a perspective view showing an example of an electrode assembly according to an embodiment of the present disclosure.
FIG. 10 illustrates a flowchart of a method of manufacturing a battery according to an embodiment of the present disclosure.

### DETAILED DESCRIPTION

Hereinafter, embodiments of the present disclosure will be described, in detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term to explain his/her invention in the best way.

The embodiments described in this specification and the configurations shown in the drawings are only some of the embodiments of the present disclosure and do not represent all of the technical ideas, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

In the figures, the sizes and relative sizes of layers and regions may be exaggerated for clarity of illustration. In other words, the sizes shown in the drawings are provided for convenience of illustration, and the present disclosure is not limited thereto. In addition, the same reference numerals denote the same elements throughout the specification.

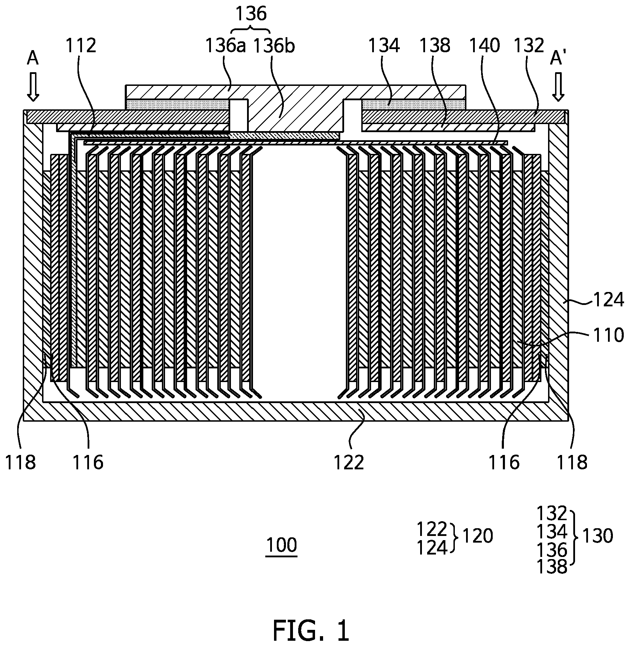

FIG. 1 illustrates a longitudinal cross-sectional view showing an example of a battery 100 according to an embodiment of the present disclosure. The battery 100 may include an electrode assembly 110, a case 120, a cap assembly 130, and an insulating washer 140.

The battery 100 may be a coin-kind or a button-kind of battery. For example, the battery 100 may have a cylindrical shape. However, the present disclosure is not limited thereto, and the battery 100 may be a cylindrical-kind, a prismatic-kind, or a pouch-kind of battery. In an example, the battery 100 may be a secondary battery capable of charging and discharging.

The electrode assembly 110 may include a first electrode, a second electrode, and a separator. In some embodiments, the electrode assembly 110 may be configured by winding the separator disposed between the first electrode and the second electrode. In other words, the electrode assembly 110 may include the first electrode, the second electrode, and a separator wound between and with the first electrode and the second electrode. The electrode assembly 110 may be wound to form a core portion, and may include a through-hole in the core portion.

The first electrode may include a first substrate, and a first active material layer located on the first substrate. A first electrode tab 112 may extend outward from a first uncoated portion of the first substrate where the first active material layer is not located, and the first electrode tab 112 may be electrically connected to a terminal plate 136 of the cap assembly 130.

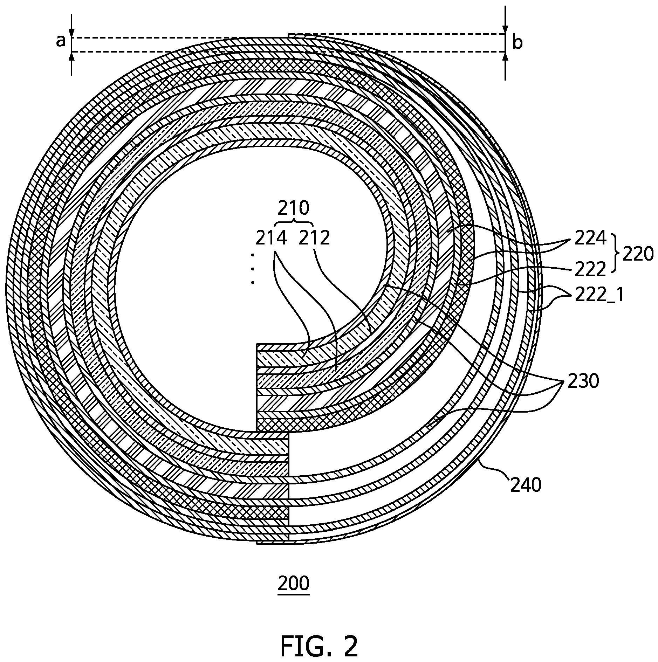

The second electrode may include a second substrate, and a second active material layer located on the second substrate. In an embodiment, a second electrode tab may extend outward from a second uncoated portion of the second substrate where the second active material layer is not located, and the second electrode tab may be electrically connected to the case 120. In another example, the second electrode tab may be omitted as needed or desired, and the second substrate may be electrically connected directly to the case 120. An example in which the second electrode tab is omitted is illustrated in more detail below with reference to FIGS. 2 to 9.

The first electrode may function as a positive electrode. In this case, the first substrate may include (e.g., may be composed of), for example, an aluminum foil, and the first active material layer may include, for example, a transition metal oxide. The second electrode may function as a negative electrode. In this case, the second substrate may include (e.g., may be composed of), for example, a copper foil or a nickel foil, and the second active material layer may include, for example, graphite.

The separator may function to prevent a short circuit between the first electrode and the second electrode, while allowing the movement of lithium ions. The separator may include (e.g., may be composed of), for example, a polyethylene film, a polypropylene film, a polyethylene-polypropylene film, or the like, but the present disclosure is not limited thereto.

The battery 100 may include the electrode assembly 110, and an outer portion that accommodates the electrode assembly 110. The outer portion of the battery 100 may include the case 120 and the cap assembly 130, and may configure the external appearance of the battery 100.

The case 120 may accommodate the electrode assembly 110 and an electrolyte. The case 120 may include a sidewall portion 124 having an approximately cylindrical shape, and a bottom portion 122 connected to one side (e.g., one end) of the sidewall portion 124. However, the present disclosure is not limited thereto, and the case 120 may have various suitable shapes, such as a circular shape or a pouch shape. In addition, the case may include (e.g., may be composed of) a metal, such as aluminum, an aluminum alloy, or a nickel-plated steel, or a laminated film or a plastic that constitutes a pouch.

The case 120 may accommodate the electrode assembly 110. The electrode assembly 110 may be inserted into the case 120 through an opening formed in one side (e.g., one end) thereof. Thereafter, the opening of the case 120 may be closed by the cap assembly 130.

Referring to FIG. 1, by welding in welding regions A and A', the opening of the case 120 may be sealed by the cap assembly 130. The separator of the electrode assembly 110 may be longer in the height direction of the electrode assembly 110 than the first electrode and the second electrode. Due to the negative electrode substrate 116 surrounding (e.g., around a periphery of) the outer circumference of the electrode assembly 110, one end of the separator of the electrode assembly 110 may be more distant from the welding regions A and A'. Similarly, due to the negative electrode substrate 116, the first electrode tab 112 of the electrode assembly 110 may be more distant from the welding regions A and A'. As such, the separator may not be caught between the case 120 and the cap assembly 130, and may not be damaged from the welding performed in the welding regions A and A'. In addition, the first electrode tab 112 may be damaged from the welding performed in the welding regions A and A', but may be prevented from causing a short circuit that may occur. An example of the negative electrode substrate 116 surrounding (e.g., around a periphery of) the outer circumference of the electrode assembly 110 will be described in more detail below with reference to FIGS. 2 to 9.

The cap assembly 130 may include a cap plate 132, an insulating layer 134, the terminal plate 136, and an insulating member 138. The cap plate 132 may cover the opening of the case 120. The cap plate 132 may be joined to (e.g., may be connected to, coupled to, or attached to) the side surface of the case 120 corresponding to the opening.

An insertion groove may be formed in the cap plate 132. In some embodiments, the insertion groove may be formed at the center of the cap plate 132. The terminal plate 136 (e.g., the insertion portion 136b of the terminal plate 136) may be inserted into the insertion groove, so that the terminal plate 136 may be joined to (e.g., connected to, coupled to, or attached to) the cap plate 132. The terminal plate 136 may include a body portion 136a, and the insertion portion 136b protruding from the body portion 136a. The insertion portion 136b of the terminal plate 136 may be inserted into the insertion groove of the cap plate 132. In addition, the insertion portion 136b of the terminal plate 136 may be connected to be in contact with the first electrode tab 112. Referring to FIG. 1, the cap assembly 130 including the terminal plate 136 may be joined to (e.g., connected to, coupled to, or attached to) the case 120, so that the insertion portion 136b faces the electrode assembly 110.

The insulating layer 134 may be disposed between the terminal plate 136 and the cap plate 132. The insulating layer 134 may have an adhesive strength, and thus, may join (e.g., may connected, couple, or attach) the terminal plate 136 to the cap plate 132. The insulating layer 134 may include (e.g., may be composed of) an insulating material, and may electrically insulate the terminal plate 136 and the cap plate 132 from each other.

In an embodiment, the insulating member 138 may be disposed on the bottom surface of the cap plate 132. The top surface of the cap plate 132 may face the body portion 136a of the terminal plate 136, and the bottom surface of the cap plate 132 may face the electrode assembly 110. The insulating member 138 may include (e.g., may be composed of) an insulating material, and may insulate between the cap plate 132 and the electrode assembly 110, or between the cap plate 132 and the first electrode tab 112.

In an embodiment, the electrode assembly 110 may include the negative electrode substrate 116 surrounding (e.g., around a periphery of) the outer circumference. The negative electrode substrate 116 may include (e.g., may be formed of) the same material as that of the substrate of the second electrode. In other embodiments, the substrate of the second electrode in the electrode assembly 110 may be extended and wound to wrap around the outer circumference of the electrode assembly. In this case, the substrate of the second electrode may be the negative electrode substrate.

In an embodiment, the electrode assembly 110 may include a conductive tape 118 that surrounds (e.g., around a periphery of) at least a portion of the outermost circumference of the electrode assembly 110. The conductive tape 118 is electrically conductive. The conductive tape 118 may fix the wound electrode assembly 110. For example, in the electrode assembly 110, the winding of the first electrode, the second electrode, and the separator may be maintained by the conductive tape 118 without being unwound. For example, the conductive tape 118 may have an adhesive strength, and may be joined to (e.g., connected to, coupled to, or attached to) at least a portion of the outermost circumference of the electrode assembly 110.

In an embodiment, the first electrode tab 112 may be bent under the terminal plate 136 within the case 120 in which the electrode assembly 110 is accommodated, and the cap assembly 130 may be joined to seal the case 120. The bent first electrode tab 112 may be prevented from short-circuiting with the electrode assembly 110 by the insulating washer 140. The insulating washer 140 may be disposed between the electrode assembly 110 and the terminal plate 136. In some embodiments, the insulating washer 140 may be disposed between the electrode assembly 110 and the first electrode tab 112 located below the terminal plate 136. The insulating washer 140 may include an insulating material. The insulating washer 140 may space apart the first electrode tab 112 and the electrode assembly 110 from each other. In some embodiments, the insulating washer 140 may electrically insulate the first electrode tab 112 and the electrode assembly 110 from each other.

FIG. 2 illustrates a cross-sectional view showing an example of an electrode assembly 200 according to an embodiment of the present disclosure. As illustrated in FIG. 2, the electrode assembly 200 may be configured by winding a first electrode 210, a second electrode 220, and a separator 230 together. In this case, the separator 230 is disposed between the first electrode 210 and the second electrode 220, thereby preventing a battery short circuit from occurring due to a contact between the first electrode 210 and the second electrode 220. In FIG. 2, some of the first electrode 210, the second electrode 220, and the separator 230 wound toward the center of the electrode assembly 200 may be omitted.

The first electrode 210 may include a first substrate 212, and a first mixture portion 214 in which an active material is disposed on at least one surface of the first substrate 212. The first electrode 210 may function as a positive electrode. In other words, the first substrate 212 may be a positive electrode substrate, and the active material disposed on the first substrate 212 may be a positive electrode active material.

The first electrode 210 may extend in the longitudinal direction so as to be wound. Based on the longitudinal direction of the first electrode 210, the first mixture portion 214 in which the active material is disposed may be formed in the central portion, and no active material may be disposed in two end portions, so that the first substrate 212 may be exposed. In FIG. 2, a portion of the first electrode 210 wound toward the winding end of the electrode assembly 200 may be omitted.

The second electrode 220 may include a second substrate 222, and a second mixture portion 224 in which an active material is disposed on at least one surface of the second substrate 222. The second electrode 220 may function as a negative electrode. In other words, the second substrate 222 may be a negative electrode substrate, and the active material disposed on the second substrate 222 may be a negative electrode active material.

The second electrode 220 may extend in the longitudinal direction so as to be wound. Based on the longitudinal direction of the second electrode 220, the second mixture portion 224 in which the active material is disposed may be formed in the central portion that is wound together with the separator 230, and an uncoated portion 222_1 in which the active material is not disposed and where the second substrate 222 is exposed may be formed in opposite end portions.

In an embodiment, the uncoated portion 222_1 of the second electrode 220 may be disposed to surround (e.g., around a periphery of) the outer circumference of the electrode assembly 200. In other words, the uncoated portion 222_1 of the second electrode 220 may extend further than the first electrode 210 and the separator 230, and may be disposed to surround (e.g., around a periphery of) the outer circumference of the electrode assembly 200. In yet other words, when unwound, the second electrode 220 is longer in the longitudinal direction compared to the first electrode 210 and the separator 230, because the uncoated portion 222_1 of the second electrode 220 may extend further in the longitudinal direction than the first electrode 210 and the separator 230. The uncoated portion 222_1 of the second electrode 220 may be wound to surround (e.g., around a periphery of) the outer circumference of the electrode assembly 200.In an embodiment, the uncoated portion 222_1 of the second electrode 220 may be disposed to surround (e.g., around a periphery of) the outer circumference of the electrode assembly 200 by at least one turn. In some embodiments, the uncoated portion 222_1 of the second electrode 220 may be disposed to surround (e.g., around a periphery of) the outer circumference of the electrode assembly 200 by three or less turns. In an embodiment, a thickness 'a' of the outer circumference of the electrode assembly 200 surrounded (e.g., around a periphery thereof) by the uncoated portion 222_1 of the second electrode 220 may be 100 µm or more and 360 µm or less, but the present disclosure is not limited thereto.

In an embodiment, the (electrically) conductive tape 240 may be attached to the outer circumference of the electrode assembly 200. The conductive tape 240 may be attached to surround (e.g., around a periphery of) at least a portion of the outer circumference of the electrode assembly 200.

In an embodiment, the conductive tape 240 may be attached to cover a winding end of the electrode assembly 200 to prevent or substantially prevent the electrode assembly 200 from unwinding. Accordingly, the conductive tape 240 may be attached to cover the end of the uncoated portion 222_1 of the second electrode 220 surrounded around (e.g., a periphery of) the outermost circumference of the electrode assembly 200. In an embodiment, the conductive tape 240 may be disposed to surround (e.g., around a periphery of) the outer circumference of the electrode assembly 200 by at least a half of a turn, but the present disclosure is not limited thereto.

In an embodiment, a thickness 'b' of the outer circumference of the electrode assembly 200 surrounded (e.g., around a periphery thereof) by the uncoated portion 222_1 of the second electrode 220 and the conductive tape 240 may be 100 µm or more and 360 µm or less, but the present disclosure is not limited thereto.

In an embodiment, at least a portion of the conductive tape 240 may include at least one of isotropic conductive adhesives (ICAs) or anisotropic conductive adhesive (ACAs). For example, the conductive tape 240 may include a polymer substrate and (electrically) conductive filler particles. In this case, both of a thermoplastic resin or a thermosetting resin may be used as the polymer substrate of the conductive tape 240, and a phenolic epoxy, polyimide, an epoxy, silicone, polyurethane, and/or the like may be used, but the present disclosure is not limited thereto. In addition, the (electrically) conductive filler particles of the conductive tape 240 may include silver, gold, copper, nickel, carbon, metal plating filler particles, and/or the like, but the present disclosure is not limited thereto.

In FIG. 2, the uncoated portion 222_1 of the second electrode 220 and the conductive tape 240 are illustrated as being spaced apart from each other in a section (e.g., in a certain or predetermined section), but this may be exaggerated for convenience of illustration.

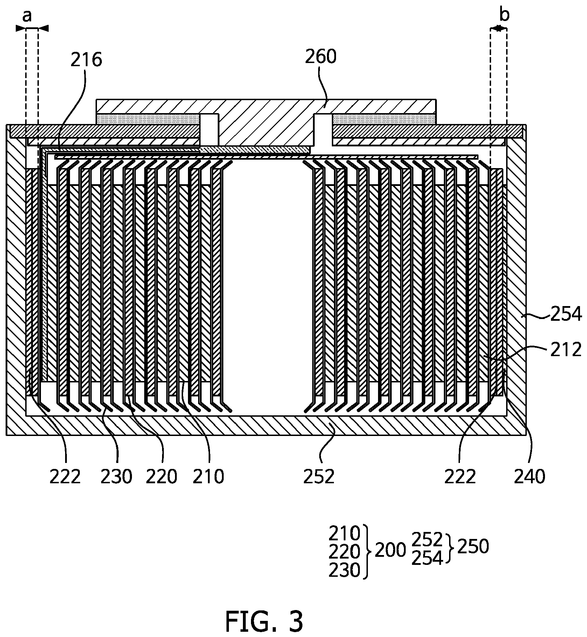

FIG. 3 illustrates a longitudinal cross-sectional view showing an example of a battery according to an embodiment of the present disclosure. FIG. 3 illustrates a battery manufactured by using the electrode assembly 200 described above with reference to FIG. 2.

As illustrated in FIG. 3, a case 250 of the battery may include a bottom portion 252, and a sidewall portion 254 extending in a direction perpendicular to or approximately perpendicular to the bottom portion 252. The case 250 may have an opening at a side opposite the bottom portion 252, and the opening of the case 250 may be sealed by a cap assembly 260. The cap assembly 260 may be welded to cover the opening of the case 250, but the present disclosure is not limited thereto.

At least a portion of the outer circumference of the electrode assembly 200 may be disposed to come into contact with the inner surface of the sidewall portion 254 of the case 250. For example, in a process of inserting the electrode assembly 200 into the case 250, the uncoated portion 222_1 of the second electrode 220 or the conductive tape 240 surrounding (e.g., around a periphery of) the outer circumference of the electrode assembly 200 may be disposed to come into contact with the sidewall portion 254 of the case 250. For example, during a battery assembling process, some regions of the outer circumference of the electrode assembly 200 may not be in complete contact with the sidewall portion 254 of the case 250, but as the electrode assembly 200 expands during a formation process, the electrode assembly 200 may be brought into complete contact with the sidewall portion 254 of the case 250.

In an embodiment, the conductive tape 240 may include adhesives on opposite surfaces thereof. One surface of the conductive tape 240 may be attached to face the outer circumference of the electrode assembly 200, and another surface (e.g., an opposite surface) of the conductive tape 240 may be attached to face the sidewall portion 254 of the case 250. Accordingly, a flow of the electrode assembly 200 within the case 250 may be suppressed, thereby enabling a more stable conduction between the electrode assembly 200 and the case 250.

In an embodiment, an electrode tab 216 connected to a separator 230 or a first electrode 210 may be spaced apart from a region where the case 250 and the cap assembly 260 are welded together. In some embodiments, the outer circumference of the electrode assembly 200 may be surrounded (e.g., around a periphery thereof) by the uncoated portion 222_1 of the second electrode 220 and the conductive tape 240, so that the separator 230 or the electrode tab 216 of the first electrode 210 may be spaced apart from the region where the case 250 and the cap assembly 260 are welded together. In a case where the thickness 'b' of the outer circumference of the electrode assembly 200 surrounded (e.g., around a periphery thereof) by the uncoated portion 222_1 of the second electrode 220 and the conductive tape 240 is less than a suitable thickness (e.g., a certain or predetermined thickness), the separator 230 may be caught in the region where the case 250 and the cap assembly 260 are welded together, and/or the separator 230 may be damaged by a welding heat. In addition, in a case where the thickness 'b' of the outer circumference of the electrode assembly 200 surrounded (e.g., around a periphery thereof) by the uncoated portion 222_1 of the second electrode 220 and the conductive tape 240 exceeds a suitable thickness (e.g., a certain or predetermined thickness), the uncoated portion 222_1 of the second electrode 220 and the conductive tape 240 may not contribute to the battery capacity, which may decrease the battery capacity. Accordingly, the thickness 'b' of the outer circumference of the electrode assembly 200 surrounded (e.g., around a periphery thereof) by the uncoated portion 222_1 of the second electrode 220 and the conductive tape 240 may be in a range of 100 µm or more and 360 µm or less.

The uncoated portion 222_1 of the second electrode 220 or the conductive tape 240 may be in direct contact with the sidewall portion 254 of the case 250, so that a configuration of the electrode tab for conducting between the second electrode 220 and the case 250 may be omitted. Accordingly, it may be possible to prevent or substantially prevent cracks from occurring in the electrode tab of the second electrode 220, and prevent the electrode tab of the second electrode 220 from being separated from the case 250 due to a vibration and/or a dropping of the battery.

In addition, the separator 230 and the electrode tab 216 of the first electrode 210 may be prevented from being caught in a region where the cap assembly 260 and the case 250 are joined together, and the separator 230 and the electrode tab 216 of the first electrode 210 may be prevented or substantially prevented from being damaged by a welding heat.

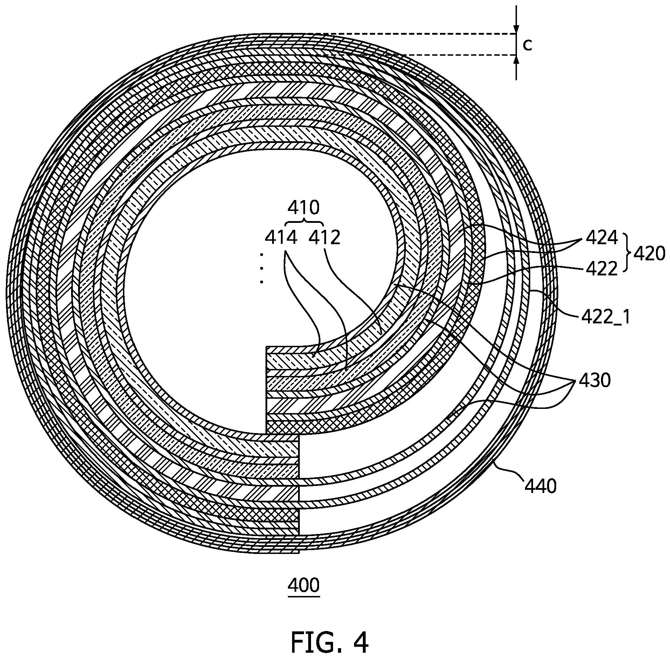

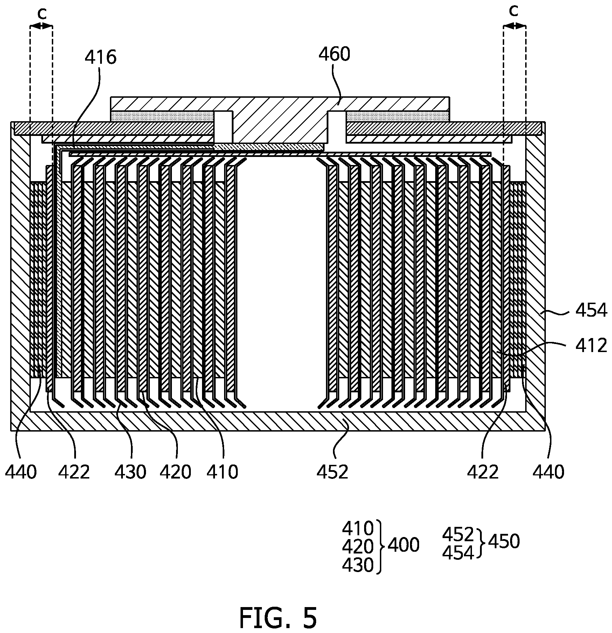

FIG. 4 illustrates a cross-sectional view showing an example of an electrode assembly 400 according to an embodiment of the present disclosure. FIG. 5 illustrates a longitudinal cross-sectional view showing an example of a battery according to an embodiment of the present disclosure. Hereinafter with reference to FIGS. 4 and 5, the same or substantially the same elements and configurations as those described above with reference to FIGS. 2 and 3 may not be repeated.

Referring to FIG. **4****,** the electrode assembly 400 may be configured by winding a first electrode 410, a second electrode 420, and a separator 430 disposed (arranged) between the first electrode 410 and the second electrode 420 together. Based on the longitudinal direction of the first electrode 410, a first mixture portion 414 in which an active material is disposed may be formed in the central region of the first electrode 410, and no active material may be disposed in opposite end portions of the first electrode 410, so that the first substrate 412 may be exposed. In this case, the first electrode 410 may function as a positive electrode, but the present disclosure is not limited thereto. The longitudinal direction of the first electrode 410 may be understood as the longitudinal side of the first electrode when unwound.

Similarly, based on the longitudinal direction of the second electrode 420, a second mixture portion 424 in which an active material is disposed may be formed in the central portion of the second electrode 420, and an uncoated portion 422_1 in which the active material is not disposed and the second substrate 422 is exposed may be formed in opposite end portions of the second electrode 420. The longitudinal direction of the second electrode 420 may be understood as the longitudinal side of the second electrode when unwound.

The uncoated portion 422_1 of the second electrode 420 may extend further than the first electrode 410 and the separator 430, and may be disposed to surround (e.g., around a periphery of) the outer circumference of the electrode assembly 400. In an embodiment, the uncoated portion 422_1 of the second electrode 420 may be disposed to surround (e.g., around a periphery of) the outer circumference of the electrode assembly 400 by at least one turn, but the present disclosure is not limited thereto. In this case, the second electrode 420 may function as a negative electrode, but the present disclosure is not limited thereto.

In an embodiment, a conductive tape 440 may be attached to the outer circumference of the electrode assembly 400. The conductive tape 440 may be disposed to surround (e.g., around a periphery of) the uncoated portion 422_1 of the second electrode 420 around the outer circumference of the electrode assembly 400 by at least one turn. In some embodiments, the conductive tape 440 may be disposed to surround (e.g., around a periphery of) the uncoated portion 422_1 of the second electrode 420 around the outer circumference of the electrode assembly 400 by two to six turns. Accordingly, a thickness 'c' of the outer circumference of the electrode assembly 400 surrounded (e.g., around a periphery thereof) by the uncoated portion 422_1 of the second electrode 420 and the conductive tape 440 may be 100 µm or more and 360 µm or less, but the present disclosure is not limited thereto.

FIG. 5 illustrates a battery manufactured by using the electrode assembly 400 described above with FIG. 4. Referring to FIG. 5, a case 450 of the battery may include a bottom portion 452, a sidewall portion 454 extending in a direction perpendicular to or approximately perpendicular to the bottom portion 452, and an opening at a side opposite to the bottom portion 452. The opening of the case 450 may be sealed by welding a cap assembly 460.

The conductive tape 440 surrounding around (e.g., a periphery of) the outer circumference of the electrode assembly 400 may be disposed to come into contact with the sidewall portion 454 of the case 450. In an embodiment, the conductive tape 440 may include adhesives on opposite surfaces thereof. One surface of the conductive tape 440 may be attached to face the outer circumference of the electrode assembly 400, and another surface of the conductive tape 440 may be attached to face the sidewall portion 454 of the case 450. Accordingly, the other surface of the conductive tape 440 may be attached to be in full contact with the sidewall portion 454 of the case 450 along the outer circumferential surface of the electrode assembly 400.

Because the conductive tape 440 may be in direct contact with the sidewall portion 454 of the case 450, the configuration of the electrode tab for conducting between the second electrode 420 and the case 450 may be omitted. Accordingly, it may be possible to prevent or substantially prevent cracks from occurring in the electrode tab of the second electrode 420, and prevent the electrode tab of the second electrode 420 from being separated from the case 450 due to a vibration and/or a dropping of the battery.

The conductive tape 440 may be attached to surround (e.g., around a periphery of) the electrode assembly 400 finished with the uncoated portion 422_1 of the first electrode 410 to a thickness greater than a suitable thickness (e.g., a certain or predetermined thickness), thereby allowing the separator 430 of the electrode assembly 400 or the electrode tab 416 of the first electrode 410 to be separated from the region where the case 450 and the cap assembly 460 are welded together. Accordingly, the separator 430 and the electrode tab 416 of the first electrode 410 may be prevented from being caught between the cap assembly 460 and the case 450, and the separator 430 and the electrode tab 416 of the first electrode 410 may be prevented or substantially prevented from being damaged by a welding heat.

In addition, compared to the embodiments described above with reference to FIGS. 2 and 3, in FIGS. 4 and 5, even if the uncoated portion 422_1 of the second electrode 420 is surrounded around (e.g., a periphery of) the outer circumference of the electrode assembly 400 with a relatively smaller number of turns, the thickness 'c' of the uncoated portion 422_1 of the second electrode 420 and the conductive tape 440 surrounded around (e.g., around a periphery of) the outer circumference of the electrode assembly 400 may be maintained at a suitable thickness (e.g., a certain or predetermined thickness) or more by adjusting the number of turns in which the conductive tape 440 is attached.

FIGS. 4 and 5 illustrate that the uncoated portion 422_1 of the second electrode 420 surrounds (e.g., around a periphery of) the outer circumference of the electrode assembly 400 by one turn, and the conductive tape 440 surrounds (e.g., around a periphery of) the electrode assembly 400 finished with the uncoated portion 422_1 of the first electrode 410 by four turns, but the present disclosure is not limited thereto. In other words, the uncoated portion 422_1 of the second electrode 420 and the conductive tape 440 may be appropriately modified as needed or desired, so that each of the uncoated portion 422_1 of the second electrode 420 and the conductive tape 440 surrounds (e.g., around a periphery of) the electrode assembly 400 by at least one turn, and the thickness 'c' of the outer circumference of the electrode assembly 400 surrounded (e.g., around a periphery thereof) by the uncoated portion 422_1 and the conductive tape 440 of the second electrode 420 may be 100 µm or more and 360 µm or less.

In FIG. 4, the uncoated portion 422_1 of the second electrode 420 and the conductive tape 440 are illustrated as being spaced apart from each other in a section (e.g., a certain or predetermined section), but this may be exaggerated for convenience of illustration.

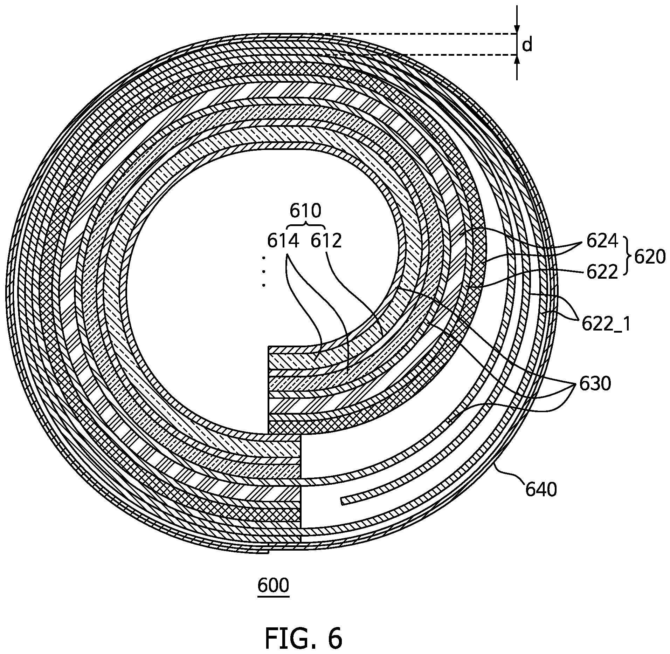

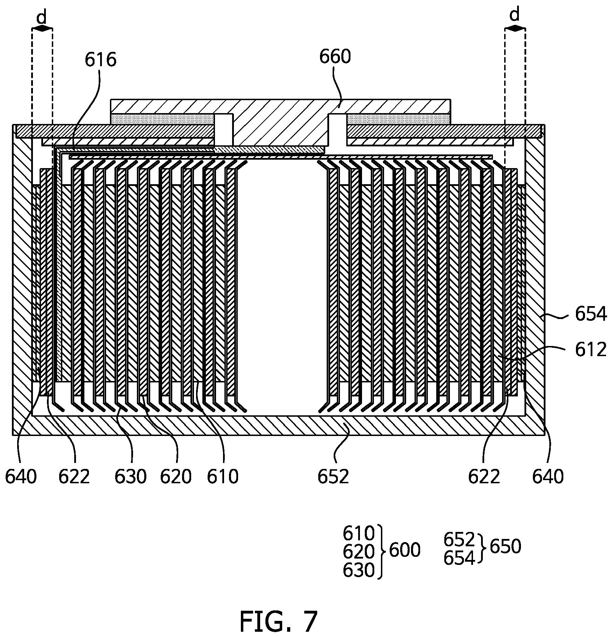

FIG. 6 illustrates a cross-sectional view showing an example of an electrode assembly 600 according to an embodiment of the present disclosure. FIG. 7 illustrates a longitudinal cross-sectional view showing an example of a battery according to an embodiment of the present disclosure. Hereinafter with reference to FIGS. 6 and 7, the same or substantially the same elements and configurations as those described above with reference to FIGS. 2 to 5 may not be repeated.

Referring to FIG. 6, the electrode assembly 600 may be configured by winding a first electrode 610, a second electrode 620, and a separator 630 disposed between the first electrode 610 and the second electrode 620 together. Based on the longitudinal direction of the first electrode 610, a first mixture portion 614 in which an active material is disposed may be formed in the central region of the first electrode 610, and no active material may be disposed in opposite end portions of the first electrode 610, so that the first substrate 612 may be exposed. In this case, the first electrode 610 may function as a positive electrode, but the present disclosure is not limited thereto.

Similarly, based on the longitudinal direction of the second electrode 620, a second mixture portion 624 in which an active material is disposed may be formed in the central region of the second electrode 620, and no active material may be disposed in opposite end portions of the second electrode 620, so that the second substrate 622 may be exposed. In this case, the second electrode 620 may function as a negative electrode, but the present disclosure is not limited thereto.

In an embodiment, a third substrate 622_1 may be disposed around the outer circumference of the electrode assembly 600. The third substrate 622_1 may be connected to the second electrode 620, and may be electrically conducted. The third substrate 622_1 may function as a negative electrode substrate, similar to the second substrate 622 of the second electrode 620. In an embodiment, the third substrate 622_1 may include (e.g., may be composed of) the same material as that of the second substrate 622 of the second electrode 620, but the present disclosure is not limited thereto.

In an embodiment, the third substrate 622_1 may be disposed to surround (e.g., around a periphery of) the outer circumference of the electrode assembly 600 by at least one turn. The third substrate 622_1 may be disposed to surround (e.g., around a periphery of) the outer circumference of the electrode assembly 600 by one to three turns, but the present disclosure is not limited thereto.

In an embodiment, a conductive tape 640 may be attached to the outer circumference of the electrode assembly 600. For example, the conductive tape 640 may be attached to at least a portion of the outer circumference of the electrode assembly 600 to cover a winding end of the electrode assembly 600. As another example, the conductive tape 640 may be attached to surround (e.g., around a periphery of) the outer circumference of the electrode assembly 600 by a plurality of turns. In other words, the length of the third substrate 622_1 and the conductive tape 640 may be appropriately modified as needed or desired, so that a thickness 'd' of the outer circumference of the electrode assembly 600 surrounded (e.g., around a periphery thereof) by the third substrate 622_1 and the conductive tape 640 is 100 µm or more and 360 µm or less.

FIG. 7 illustrates a battery manufactured by using the electrode assembly 600 described above with reference to FIG. 6. Referring to FIG. 7, a case 650 of the battery may include a bottom portion 652, a sidewall portion 654 extending in a direction perpendicular to or approximately perpendicular to the bottom portion 652, and an opening at a side opposite to the bottom portion 652. The opening of the case 650 may be sealed by welding a cap assembly 660.

The third substrate 622_1 or the conductive tape 640 surrounding (e.g., around a periphery of) the outer circumference of the electrode assembly 600 may be disposed to be in contact with the sidewall portion 654 of the case 650. In an embodiment, the conductive tape 640 may include adhesives on opposite surfaces thereof. One surface of the conductive tape 640 may be attached to face the outer circumference of the electrode assembly 600, and another surface of the conductive tape 640 may be attached to face the sidewall portion 654 of the case 650.

In FIG. 6, the third substrate 622_1 and the conductive tape 640 are illustrated as being spaced apart from each other in a section (e.g., in a certain or predetermined section), but this may be exaggerated for convenience of illustration.

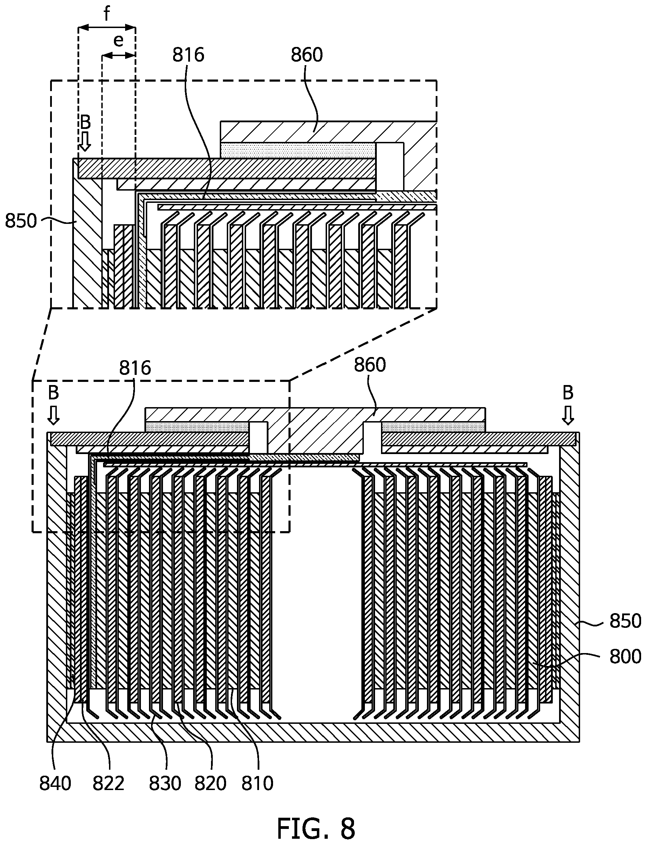

FIG. 8 illustrates a partially enlarged view of a battery according to an embodiment of the present disclosure. FIG. 8 illustrates a partially enlarged view showing a region where a case 850 and a cap assembly 860 are joined together in a cross-sectional view of a battery according to an embodiment of the present disclosure.

In an embodiment, an electrode assembly 800 in which a first electrode 810, a second electrode 820, and a separator 830 are wound together is accommodated inside a case 850, and the case 850 may be sealed as the case 850 and the cap assembly 860 are joined together. The case 850 and the cap assembly 860 may be welded together, and welding regions B and B' may be formed along the outer circumferential surface of the cap assembly 860.

In an embodiment, the outer circumference of the electrode assembly 800 may be formed so that an uncoated portion 822 of the second electrode 820 surrounds (e.g., around a periphery) therearound by at least one turn. In addition, a conductive tape 840 may be attached to surround (e.g., around a periphery of) the uncoated portion 822 of the second electrode 820 around the outer circumference of the electrode assembly 800 by at least one turn. A thickness 'e' of the outer circumference of the electrode assembly 800 surrounded (e.g., around a periphery thereof) by the uncoated portion 822 of the second electrode 820 and the conductive tape 840 may be 100 µm or more and 360 µm or less.

Referring to FIG. 8, as the thickness 'e' of the outer circumference of the electrode assembly 800 surrounded (e.g., around a periphery thereof) by the uncoated portion 822 of the second electrode 820 and the conductive tape 840 increases, a distance 'f' between the end of the electrode tab 812 of the first electrode 810 and the welding region B may be increased. Accordingly, the electrode tab 812 may be prevented from interfering with the welding region B and/or from being damaged by a welding heat.

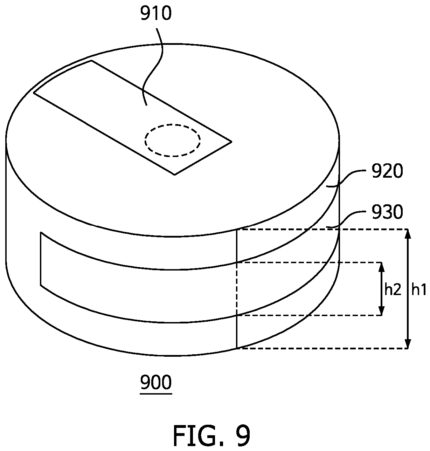

FIG. 9 illustrates a perspective view showing an example of an electrode assembly 900 according to an embodiment of the present disclosure. The electrode assembly 900 may be configured by winding a first electrode, a second electrode, and a separator disposed between the first electrode and the second electrode together. In an embodiment, a substrate 920 of the second electrode may be extended and wound to surround (e.g., around a periphery of) the outer circumference of the electrode assembly 900. The substrate 920 of the second electrode may be wound to surround (e.g., around a periphery of) the outer circumference of the electrode assembly 900 by at least one turn.

A conductive tape 930 may be attached to at least a portion of the outer circumference of the electrode assembly 900. The conductive tape 930 may be attached to surround (e.g., around a periphery of) at least a portion of the substrate 920 of the second electrode around the outer circumference of the electrode assembly 900. In addition, the conductive tape 930 may be attached to cover an end of the substrate 920 of the second electrode to prevent or substantially prevent the winding from unwinding.

In an embodiment, in a case where the electrode assembly 900 is accommodated in the case, at least a portion of the substrate 920 of the second electrode or the conductive tape 930 disposed around the outermost circumference of the electrode assembly 900 may be in contact with the inner surface of the case. Accordingly, the substrate 920 of the second electrode and/or the conductive tape 930 may be electrically conducted. In this case, the second electrode and the case may function as a negative electrode.

In an embodiment, a width 'h2' of the conductive tape 930 in the height direction of the electrode assembly 900 may be greater than or equal to 50% and less than or equal to 100% of a width 'h1' of the electrode assembly 900. As the contact area between the conductive tape 930 and the case increases, an electrical conduction effect between the conductive tape 930 and the case may be increased or maximized.

In an embodiment, a first electrode tab 910 may be formed on one side of the electrode assembly 900. The first electrode tab 910 may be connected to the first electrode. The first electrode tab 910 may be connected to the cap assembly after the electrode assembly 900 is accommodated in the case. The first electrode tab 910 may be bent toward the electrode assembly 900 under the cap plate. In an embodiment, the first electrode tab 910 may be bent, and thus, may be disposed on the core portion of the electrode assembly 900. The first electrode may function as a positive electrode, and the first electrode tab 910 may function as a positive electrode tab.

In FIG. 9, the conductive tape 930 is illustrated as surrounding (e.g., around a periphery of) only a portion of the outer circumference of the electrode assembly 900, but the present disclosure is not limited thereto, and the conductive tape 930 may be attached to surround (e.g., around a periphery of) the outer circumference of the electrode assembly 900 by at least one turn.

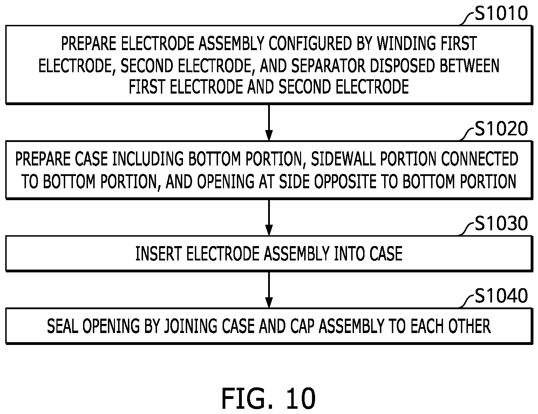

FIG. 10 illustrates a flowchart of a method of manufacturing a battery according to an embodiment of the present disclosure. The method of manufacturing the battery may start, and an electrode assembly configured by winding a first electrode, a second electrode, and a separator disposed between the first electrode and the second electrode may be prepared (S1010). An electrode tab may be connected to a substrate of the first electrode. A substrate of the second electrode may be extended and wound, so as to be disposed to surround (e.g., around a periphery of) the outer circumference of the electrode assembly. In an embodiment, the substrate of the second electrode may be wound to surround (e.g., around a periphery of) the outer circumference of the electrode assembly by one to three turns.

In an embodiment, the preparing of the electrode assembly may include attaching a conductive tape to surround (e.g., around a periphery of) at least a portion of the outer circumference of the electrode assembly. As an example, the conductive tape may be attached to surround (e.g., around a periphery of) the outer circumference of the electrode assembly by at least a half of a turn, so as to cover a winding end of the electrode assembly. As another example, the conductive tape may be attached to surround (e.g., around a periphery of) the outer circumference of the electrode assembly by at least one turn. In this case, the thickness of the outer circumference of the electrode assembly surrounded (e.g., around a periphery thereof) by the substrate of the second electrode and the conductive tape may be 100 µm or more and 360 µm or less.

In an embodiment, the conductive tape may include adhesives on opposite surfaces thereof. In this case, one surface of the conductive tape may be attached to face the outer circumference of the electrode assembly, and another surface of the conductive tape may be attached to face the sidewall portion of the case.

A case including a bottom portion, a sidewall portion connected to the bottom portion, and an opening at a side opposite to the bottom portion may be prepared (S1020). Thereafter, the electrode assembly may be inserted into the case (S1030). In this case, at least a portion of the outer circumference of the electrode assembly may be disposed to come into contact with the sidewall portion of the case. In addition, at least a portion of the conductive tape may be disposed to come into contact with the sidewall portion of the case.

Thereafter, the case and the cap assembly may be joined to (e.g., connected to, coupled to, or attached to) each other to seal the opening (S1040), and the method may end. In this case, in the inserting of the electrode assembly before the opening is sealed by the cap assembly, the electrode tab connected to the substrate of the first electrode may be connected to the cap assembly.

The flowchart illustrated in FIG. 10 and the corresponding description are provided as examples, and the present disclosure is not limited to the flowchart described above with reference to FIG. 10. For example, one or more processes in the flowchart may be added/changed/deleted, the order of one or more processes may be changed, and/or one or more processes may be performed concurrently or simultaneously with each other.

Although the present disclosure has been described above with respect to embodiments thereof, the present disclosure is not limited thereto. Various modifications and variations can be made thereto by those skilled in the art within the scope of the present disclosure and the equivalent scope of the appended claims.

### DESCRIPTION OF SOME REFERENCE SYMBOLS

100: battery
110: electrode assembly
112: first electrode tab
116 : negative electrode substrate
118 : conductive tape
120 : case
130 : cap assembly
132 : cap plate
134 : insulating layer
136 : terminal plate
136a : body portion
136b : insertion portion
138 : insulating member
140 : insulating washer

## Claims

1. A battery (100) comprising:
an electrode assembly (110, 200, 400, 600, 800 ,900) comprising a first electrode (210, 410, 610, 810), a second electrode (220, 420, 620, 820), and a separator (230, 430, 630, 830) between the first electrode (210, 410, 610, 810) and the second electrode (220, 420), and the first electrode (210, 410, 610, 810), the second electrode (220, 420, 620, 820) and the separator (230, 430, 630, 830) being wound together;
a case (120, 250, 450, 650, 850) configured to accommodate the electrode assembly (110, 200, 400, 600, 800 ,900), and comprising a bottom portion (122, 252, 452, 652), a sidewall portion (124, 254, 454, 654) connected to the bottom portion (122, 252, 452, 652), and an opening at a side opposite to the bottom portion (122, 252, 452, 652); and
a cap assembly (130, 260, 460, 660, 860) configured to seal the opening by being coupled to one end of the sidewall portion (124, 254, 454, 654) of the case (120, 250, 450, 650, 850),
wherein a substrate (222, 422, 622) of the second electrode (220, 420, 620, 820) extends and is wound to surround an outer circumference of the electrode assembly (110, 200, 400, 600, 800 ,900), and
wherein at least a portion of the outer circumference of the electrode assembly (110, 200, 400, 600, 800 ,900) contacts the sidewall portion of the case (120, 250, 450, 650, 850).

2. The battery (100) as claimed in claim 1, wherein the substrate (222) of the second electrode (220) surrounds the outer circumference of the electrode assembly (200) by one to three turns.

3. The battery (100) as claimed in claims 1 or 2, wherein the substrate (222) of the second electrode (220) spaces the separator (230) of the electrode assembly (200) from a region where the cap assembly (130) and the case (120) are coupled to each other.

4. The battery (100) as claimed in one of claims 1 to 3, wherein the electrode assembly (110, 200) further comprises a conductive tape (118, 240) surrounding at least a portion of the outer circumference of the electrode assembly (200), and
wherein at least a portion of the conductive tape (118, 240) contacts the sidewall portion of the case (120).

5. The battery (100) as claimed in claim **4,** wherein the conductive tape (118, 240) surrounds the outer circumference of the electrode assembly (200) by at least a half of a turn to cover a winding end of the electrode assembly (200).

6. The battery (100) as claimed in claim **4,** wherein the conductive tape (440) surrounds the outer circumference of the electrode assembly (400) by two to six turns.

7. The battery (100) as claimed in claim **4,** wherein the conductive tape (118, 240, 440, 640) surrounds the outer circumference of the electrode assembly (200, 400, 600) by at least one turn, and
wherein a thickness of the outer circumference of the electrode assembly (200, 400, 600) surrounded by the substrate of the second electrode (220, 420, 620) and the conductive tape (240, 440, 640) is 100 µm or more and 360 µm or less.

8. The battery (100) as claimed in one of claims 4 to 7, wherein the conductive tape (240, 440, 640) spaces the separator of the electrode assembly (200, 400, 600) from a region where the cap assembly and the case are coupled to each other.

9. The battery (100) as claimed in one of claims 4 to 8, wherein the conductive tape (240, 440, 640) comprises adhesives on opposite surfaces thereof,
wherein one surface of the conductive tape (240, 440, 640) from among the opposite surfaces faces the outer circumference of the electrode assembly, and
wherein another surface of the conductive tape (240, 440, 640) from among the opposite surfaces faces the sidewall portion of the case.

10. A method of manufacturing a battery (100), the method comprising:
preparing an electrode assembly (110, 200, 400, 600, 800, 900) by winding a first electrode (210,410, 610, 810), a second electrode (220, 420, 620, 820), and a separator (230, 430, 630, 830) disposed between the first electrode (210, 410, 610, 810) and the second electrode (220, 420, 620, 820) together;
preparing a case (120, 250, 450, 650, 850) comprising a bottom portion (122, 252, 452, 652), a sidewall portion (124, 254, 454, 654) connected to the bottom portion (122, 252, 452, 652), and an opening at a side opposite to the bottom portion (122, 252, 452, 652);
inserting the electrode assembly (110, 200, 400, 600, 800, 900) into the case (120, 250, 450, 650, 850); and
sealing the opening by coupling the case (120, 250, 450, 650, 850) and a cap assembly (130, 260, 460, 660, 860) to each other,
wherein a substrate of the second electrode (220, 420, 620, 820) extends and is wound to surround an outer circumference of the electrode assembly (110, 200, 400, 600, 800, 900), and
wherein at least a portion of the outer circumference of the electrode assembly (110, 200, 400, 600, 800, 900) contacts the sidewall portion (124, 254, 454, 654) of the case (120, 250, 450, 650, 850).

11. The method as claimed in claim 10, wherein the preparing of the electrode assembly (110) comprises winding the substrate of the second electrode (220) to surround the outer circumference of the electrode assembly (110) by one to three turns.

12. The method as claimed in one of claims 10 or 11, wherein the preparing of the electrode assembly (110) comprises attaching a conductive tape (240) to surround at least a portion of the outer circumference of the electrode assembly (110), and
wherein the inserting of the electrode assembly (110) comprises arranging at least a portion of the conductive tape (240) to contact with the sidewall portion (124) of the case (120).

13. The method as claimed in claim 12, wherein the attaching of the conductive tape (240) comprises attaching the conductive tape (240) to surround the outer circumference of the electrode assembly (200) by at least a half of a turn to cover a winding end of the electrode assembly.

14. The method as claimed in claim 12, wherein the attaching of the conductive tape (240) comprises attaching the conductive tape (240) to surround the outer circumference of the electrode assembly (200) by at least one turn, and
wherein a thickness of the outer circumference of the electrode assembly (200) surrounded by the substrate of the second electrode (220) and the conductive tape (240) is 100 µm or more and 360 µm or less.

15. The method as claimed in claim 12, wherein the conductive tape (240) comprises adhesives on opposite surfaces thereof, and
wherein the attaching comprises attaching one surface of the conductive tape (240) from among the opposite surfaces to face the outer circumference of the electrode assembly (200), and attaching another surface of the conductive tape (240) from among the opposite surfaces to face the sidewall portion (124) of the case (120).
